# EUROPEAN PATENT SPECIFICATION

(11) **EP 2 580 896 B1**
(45) Date of publication and mention of the grant of the patent: **26.02.2020**
(21) Application number: 11795959.3
(22) Date of filing: 14.06.2011
(51) Int. Cl.: H04H 20/28, H04L 29/08, H04L 29/06, H04H 20/93, H04H 60/91

(54) **HYBRID DELIVERY MECHANISM IN A MULTIMEDIA TRANSMISSION SYSTEM**
HYBRIDER AUSGABEMECHANISMUS IN EINEM MULTIMEDIA-ÜBERTRAGUNGSSYSTEM
MÉCANISME DE FOURNITURE HYBRIDE DANS UN SYSTÈME DE TRANSMISSION MULTIMÉDIA

(30) Priority: 14.06.2010 US 354473 P
(43) Date of publication of application: 17.04.2013
(73) Proprietor: Samsung Electronics Co., Ltd., Gyeonggi-do 443-742 (KR)
(72) Inventor: XU, Yiling, Gyeonggi-do 443-742 (KR); RHYU, Sung-Ryeul, Gyeonggi-do 443-742 (KR); SONG, Jae-Yeon, Gyeonggi-do 443-742 (KR)
(74) Representative: Nederlandsch Octrooibureau
(86) International application number: PCT/KR2011/004362
(87) International publication number: WO 2011/159093

(56) References cited:
- WO-A1-2010/054240
- KR-A- 20050 032 945
- US-A1- 2003 195 979
- US-A1- 2008 199 021
- US-A1- 2008 244 659
- "Service Guide for Mobile Broadcast Services ; OMA-TS-BCAST_Service_Guide-V1_1-20100609-D ", OMA-TS-BCAST_SERVICE_GUIDE-V1_1-20100609-D , OPEN MOBILE ALLIANCE (OMA), 4330 LA JOLLA VILLAGE DR., SUITE 110 SAN DIEGO, CA 92122 ; USA , no. 1.1 9 June 2010 (2010-06-09), pages 1-300, XP064031646, Retrieved from the Internet: URL:http://member.openmobilealliance.org/f tp/Public_documents/bcast/BCASTv1_1/Perman ent_documents/ [retrieved on 2010-06-09]

## Description

### [Technical Field]

The present invention relates generally to a multimedia transmission system, and more particularly, to a hybrid delivery mechanism in a multimedia transmission system.

### [Background Art]

ISO/IEC 14496-12 has proposed an International Organization for Standardization (ISO) base file format as a standard file format to be used for multimedia services. Having a flexible and extensible file structure, the ISO base file format is the basis of various multimedia file formats. The ISO base file format is designed to have an object-oriented structure so as to include various types of media resources and metadata, as a standardized file structure for packaging media resources and metadata. For example, the Joint Photographic Experts Group (JPEG) 2000, and 3rd Generation Partnership Project (3GPP) file formats are made based on the ISO base file format, and the Moving Picture Experts Group (MPEG)-4 file format is also an extension of the ISO base file format.

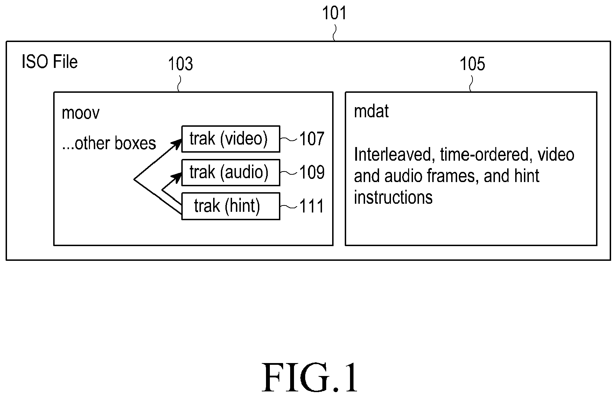

FIG. 1 is a diagram illustrating the general format of an ISO base file.

The information and functions necessary for playing a plurality of media contents together are created in the form of an object-based box. That is the ISO base file is structured as a sequence of objects; some of these objects may contain other objects. The sequence of objects in the ISO base file may contain a presentation metadata wrapper (a Movie Box), preferably the ISO base file may contain exactly one presentation metadata.

In the embodiment illustrated in FIG. 1, an ISO base file 101 includes a movie box 'moov' box 103 and a media data box 'mdat' box 105.

The 'moov' box 103 stores temporal and spatial position information and codec information for the media data stored in the media data box 105, and the 'moov' box's sub-boxes define the metadata for a presentation.

The 'mdat' box 105 can hold the actual media data for a presentation. That is, the 'mdat' box 105 stores media data (or a media stream) such as video and audio.

In the 'moov' box 103, tracks 'trak' 107, 109, and 111 include timed sequence of related samples in the ISO base media file. The 'trak' 107 includes information about audio data, the 'trak' 109 includes information about video data, and the 'trak' 111 includes information for a streaming service.

Open Mobile Alliance's specification document "Service Guide for Mobile Broadcast Services", Draft Version 1.1, June 2010, discloses the functionality of the Service Guide in a Mobile TV transmission system, where the Service Guide is used to provide information about the services and content available via broadcast channels, interaction channels or both. WO 2010/054240 discloses a method for regionalized delivery of hybrid mobile broadcast service e.g. multimedia broadcast and multicast service (MBMS) and broadcast and multicast service (BCMCS), to a wireless terminal. The method enables combining multiple local area infrastructures to form a regionalized infrastructure for delivering the hybrid service across a designated region. US 2008/244659 discloses a media content access system for detecting a user selection and initiating navigation to a location in a program guide based on the selected option.

### [Disclosure]

### [Technical Problem]

A multimedia transmission system using the above file format structure requires a hybrid delivery mechanism for client and server.

The present invention has been made to address at least the above-mentioned problems and/or disadvantages and to provide at least the advantages described below.

### [Technical Solution]

The invention is related to methods according to claims 1 and 7, a server according to claim 6 and a client according to claim 12. Further embodiments of the invention are defined by the dependent claims.

### [Advantageous Effects]

A client receives a service discovery entity from service provider via various networks. When the client parses service fragment, the client already could know whether the service is hybrid service or not based on the ServiceType. That is, the client doesn't need to parse component and acquisition information for recognizing that the service is hybrid or not. Thus, signaling by using the ServiceType within a service fragment is a shortcut for the client to make the decision.

A serviceRelationship may be signaled in A service fragment, and a componentRelationship may be signaled in A component fragment. Besides, the details description for each service/component could also be signaled ServiceDescription/componentDescription, e.g. bitrate, resolution, quality, language and so on. Such description will help the client to choose an expected one.

The above and other exemplary features, aspects, and advantages of the present invention will be more clearly understood from the following detailed description taken in conjunction with the accompanying drawings, in which like reference numerals will be understood to refer to like parts, components and structures.

### [Description of Drawings]

FIG. 1 is diagram illustrating the general format of an ISO base file;
FIG. 2 is illustration for an exemplary hybrid delivery system;
FIG. 3 is a flowchart illustrating a process of accessing service by a client without hybrid indication in a multimedia transmission system, according to an embodiment of the present invention;
FIG. 4 is a flowchart illustrating a process of accessing service by a client with hybrid indication a multimedia transmission system, according to an embodiment of the present invention;
FIG. 5 is an example about synchronization problem in hybrid delivery, according to an embodiment of the present invention;
FIG. 6 is an solution about synchronization problem in hybrid delivery, according to an embodiment of the present invention;
FIG. 7 is an acquisition example in hybrid delivery, according to an embodiment of the present invention;
FIG. 8 is an service discovery entity in TLV packet, according to an embodiment of the present invention;
FIG. 9 is a flowchart illustrating a process of accessing service by a client, according to an embodiment of the present invention;
FIG. 10 is a flowchart illustrating a process of providing service discovery information by a server, according to an embodiment of the present invention;
FIG. 11 is a block diagram illustrating a structure of a client in a multimedia transmission system, according to an embodiment of the present invention;
FIG. 12 is a block diagram illustrating a structure of a server in a multimedia transmission system, according to an embodiment of the present invention;
FIG. 13 is diagram illustrating a structure of a service discovery entity for hybrid delivery, according to an embodiment of the present invention.

### [Mode for Invention]

Certain exemplary embodiments of the present invention will be described in detail herein below with reference to the accompanying drawings. The same or similar components may be designated by the same or similar reference numerals. In the following description, specific details such as detailed configuration and components are merely provided to assist the overall understanding of embodiments of the present invention. Therefore, it should be apparent to those skilled in the art that various changes and modifications of the embodiments described herein can be made without departing from the scope of the invention. Detailed descriptions of constructions or processes known in the art may be omitted to avoid obscuring the subject matter of the present invention.

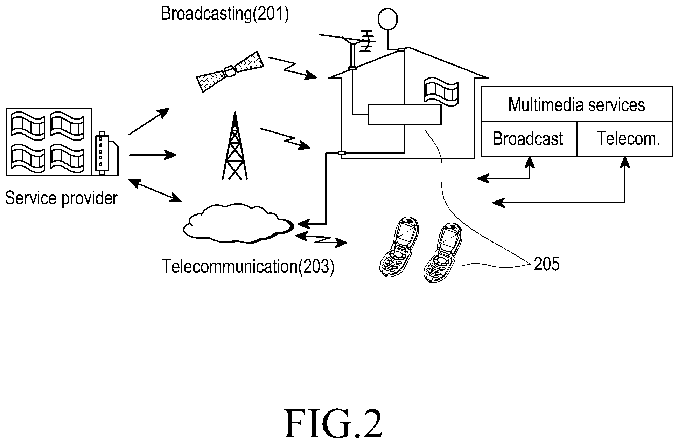

As shown in FIG. 2, content may be delivered over hybrid network, e.g. some components may be delivered over broadcast network and some components may be delivered over telecommunication network. Because different network has its own advantages and limitations, e.g. broadcast network could serve many viewers (i.e., point to multi point) simultaneously and stably, but it is only for unidirectional. Telecommunication could satisfy special request (i.e., point to point) from some users based on bidirectional network, but it has congested problem.

The hybrid network according to an embodiment of the present invention could provide services with those advantages of both networks (broadcast and telecommunication network). The mechanism to support hybrid content delivery is proposed in this document.

### 1. mechanism 1:hybrid delivery indication

### 1.1 problem

In a hybrid delivery system, a client 205 may receive a service from different delivery paths, e.g. one component from broadcast network 201, and another from telecommunication network 203. The client should combine these components and then consumes the service. In the present invention, the term 'hybrid delivery' and 'hybrid delivery mechanism' can be understood as a 'method' or 'system' for providing multimedia service component via different networks (or delivery paths).

Not all clients could support the hybrid delivery. Or even though some client could support the hybrid delivery, but the some client would not like to do the hybrid delivery because complicated processes and high cost of the hybrid delivery. For this purpose, a client should know whether a type of the service is hybrid or not, quickly and easily.

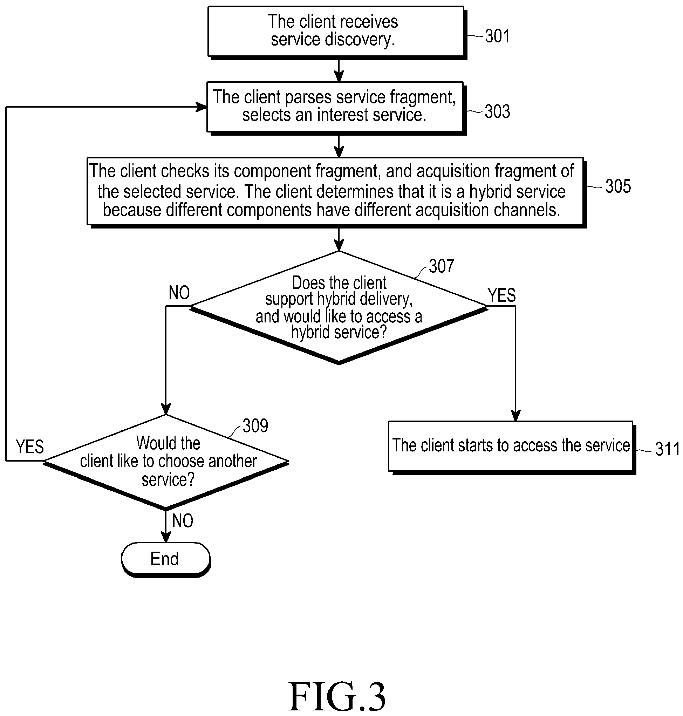

Based on the current mechanism, a client's procedure for accessing a service is illustrated in FIG. 3.

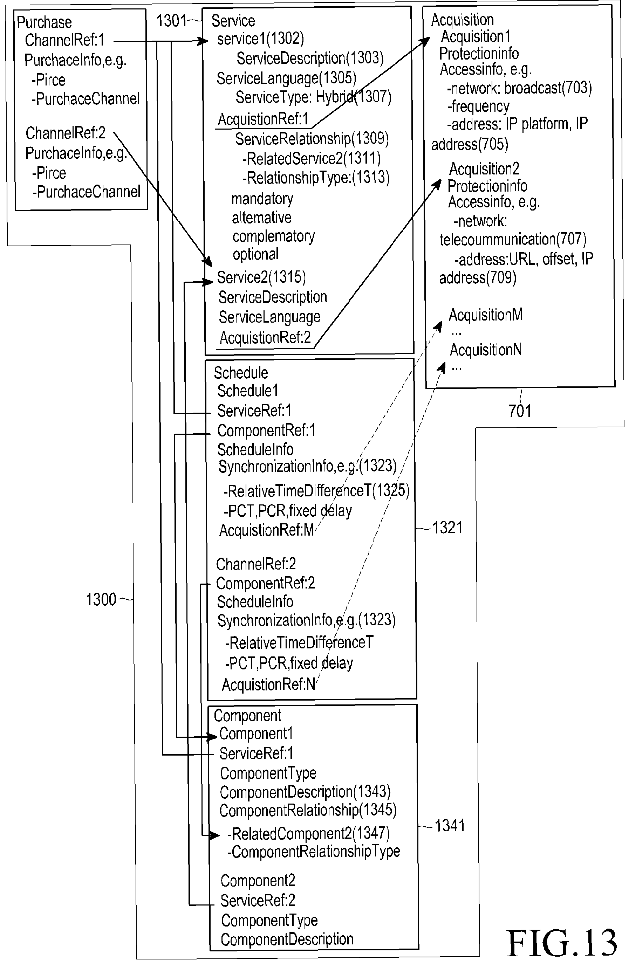

A client receives service discovery information (e.g., a service discovery entity) from service provider (or server) via various networks in step 301. A service discovery entity is used to describe an available service and its access information. Specific features about the service discovery entity will be described by referring Fig. 13. Detailed structure of the service discovery entity will be discussed later in the present invention.

The Client parses services fragment and selects interest service in step 303. The Client check component fragment and acquisition fragment of the selected service in step 305. Then the client could find the interest service is hybrid service because the different components of the interest service have different acquisition channel in step 305. That is, the Client could not decide whether the interest service is hybrid case or not when the client chooses the interest service from the service fragment. Only after the client parses all components belong to this interest service and their acquisition fragment, the client could know the interest service is hybrid delivery case. The client determines whether the client could support hybrid delivery service and the client (even though couldn't support) would like to access the hybrid service in step 307. If the client does not support the hybrid delivery service and the client would not like to access such service, the client determines whether the client would like to select other service again in step 309. Depending on the determining the client will give up or select the service again. However, the client already costs lots of time and process before determining the type of the interest service. On the other hand, if the client support hybrid delivery or the client would like to access such service 307, the client starts to access the interest service in step 311.

### 1.2 solution

### Hybrid signaling in ServiceType

Type about 'Hybrid' may be specified in the ServiceType 1307 as Table 1. The ServiceType could signal whether a service is from one channel, or from different channels within one kind of network, or even different channels of different kind of networks. Selectively, The ServiceType may be an attribute of metadata, or a field of any data structure.

**[Table 1]**

| Type | | Description |
|---|---|---|
| 1 | | From one delivery channel |
| 2 | | From different channels in one kind of network, e.g. from two channels of broadcast network. |
| | 2.1 | The service/component from another channel of the same network is mandatory for the current described service. |
| | 2.2 | The service/component from another channel of the same kind of network is not mandatory for the current described service. |
| 3 | | From different channels in different kind of networks, e.g. one is from broadcast, and another is from telecommunication. |
| | 3.1 | The service/component from another channel of the different network is mandatory for the current described service. |
| | 3.2 | The service/component from another channel of the different kind of network is not mandatory for the current described service. |
| Other | | Reserved for other types used in future. |

A service fragment 1301 could be sent more frequently than other service information to the client, so the client could parse and choose the service quicker.

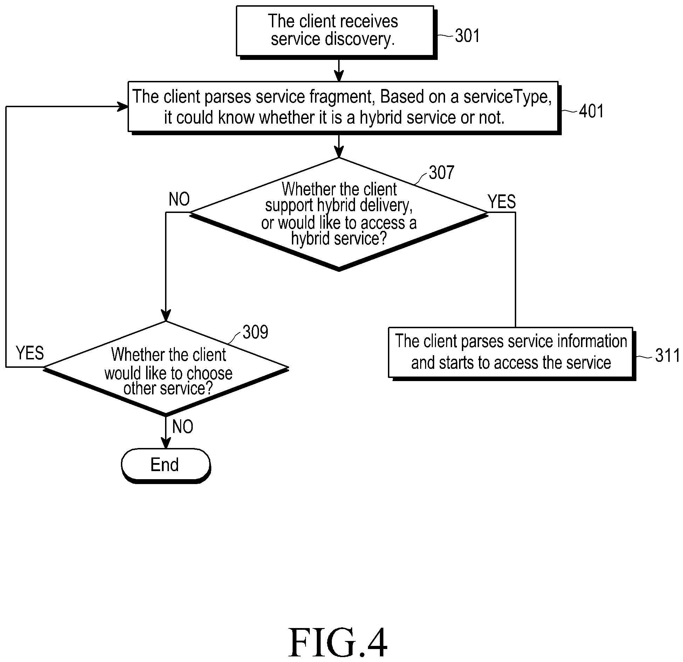

Based on this new signaling, a client's accessing service process according to an embodiment of the present invention is illustrated in FIG. 4.

A client receives a service discovery entity from service provider via various networks in step 301. When the client parses service fragment 1301 in step 401, the client already could know whether the service is hybrid service or not based on the ServiceType. That is, the client doesn't need to parse component and acquisition information for recognizing that the service is hybrid or not. Thus, signaling by using the ServiceType within a service fragment is a shortcut for the client to make the decision.

In the procedure illustrated in Fig. 4, one or more steps may be omitted while implementing embodiments according to the present invention.

### 2. mechanism 2: service/component relationship signaling

### 2.1 problem

Different hybrid scenario and use case are required in the market. Thus, service/component relationship signaling for supporting the hybrid delivery is necessary.

For example, one service is a football game provided by one operator (i.e., service provider), another service is the introduction about the team members in the football game provided by some other users. But the client could not know these two services could be combined to receive rich information without signaling for relationship between the two services.

Another example, one service is travel program for all countries, and another service is local advertisement program (e.g., food introduction or restaurant information that is related to a region in the travel program) provided by local service providers. If the client could know these two service relationship in advance, the client could choose both of two services. In this case, the advertisement information will pop in the client's screen when the related region is shown in the travel program.

### 2.2 solution - serviceRelationship/componentRelationship

For satisfying various hybrid use case requirement, the servicerelationship 1309/component relationship 1345 is proposed for signaling.

In the hybrid case, the relationship among service/component may be signaled.

*59RelatedServiceID 1311/RelatedComponentID 1347 is a signal about which service/component is related.

RelationshipType 1313 is a signal about which kinds of relationship of them, it could be. Followings are examples of values of the RelationshipType.
1) Mandatory, means the referred channel is mandatory for this service. For example, video is in service1/component1 and audio is in service2/component2, both services/components should be needed to consume a complete service.
2) Alternative, means the referred service/component could be the alternative choice for the described service. For example, service 1 is BBC news video and audio in English, and service2 is BBC news audio in French. The client could choose the service 1 only, or combine the video in the service 1 and audio in the service2. The details about each service (i.e., service 1 and service2) could be signaled in ServiceDescription 1303 and ServiceLanguage 1305.
3) Complementary, means that the referred service/component could be the complementary for the described service/component. For example, an user (or a client) is watching a foreign language movie with a basic subtitle via a broadcast channel from a service provider, but the user may require Subtitling for Deaf and Hard-of-hearing (SDH) subtitle. In this case, the user will send a request to get a SDH subtitle for this movie to the service provider (or other service provider) using a telecommunication channel (or the broadband channel). The network sends the requested SDH subtitle to the user's terminal device over the broadband channel (or the telecommunication channel). The terminal device then replaces the basic subtitle of the movie with the SDH subtitle and displays it to the user to allow the user to enjoy the movie.
4) Optional, means the referred service/component is optional when the client access the described service (e.g., a local advertisement for a travel program).

A serviceRelationship 1309 may be signaled in the service fragment 1301, and a componentRelationship 1345 may be signaled in the component fragment 1341. Besides, the details description for each service/component could also be signaled ServiceDescription 1303/componentDescription 1343, e.g. bitrate, resolution, quality, language and so on. Such description will help the client to choose an expected one.

### 3. mechanism 3: synchronization

### 3.1 problem

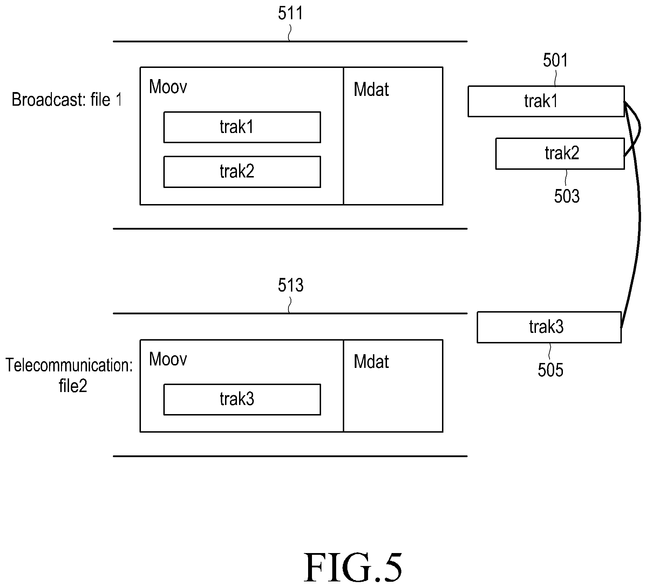

A synchronization problem is a key problem in hybrid delivery mechanism. As an example in FIG. 5, different files are delivered in different channels, e.g. one in broadcast channel and another in telecommunication channel. Two or more tracks (or 'trak's) 501, and 503 inside one file 511 could be synchronized based on a decoding time, composition time, and edit list in the 'moov' box. But how to synchronize the two or more tracks (or 'trak's) 501, and 505 sent in two or more different files 511, and 513 is a missing hole.

### 3.2 solution

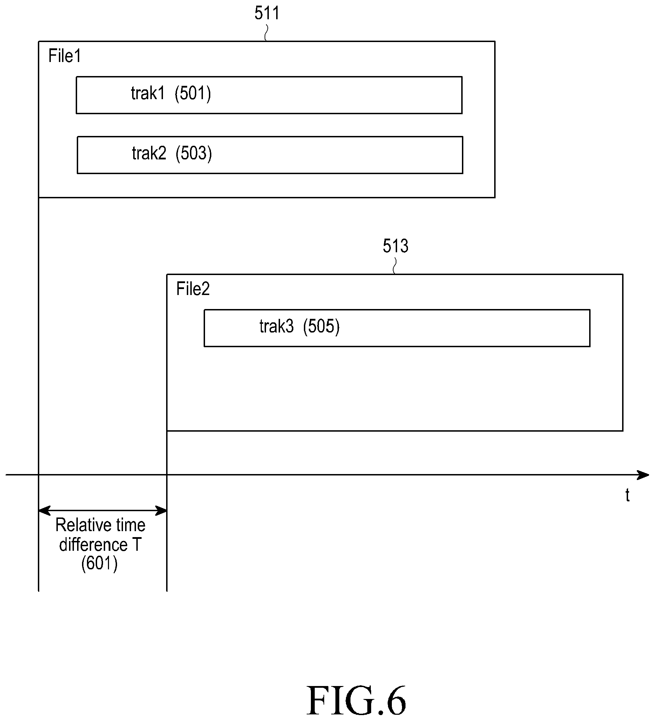

The relative time difference between files (i.e., ISO files) in the hybrid delivery should be signaled, as FIG. 6.

Relative time difference T 601 between file1 511 and file2 513 is indicated. Based on the relative time difference T, the client could know how to synchronize the tracks (or 'trak's) 501, and 505 within these two files 511, and 513. Information required for indicating the relative time difference T are as Table 2.

**[Table 2]**

| Field | Description |
|---|---|
| FileID | File identifier that has a reference file from other channel |
| Referred fileID | The referred file identifier |
| T | The relative time difference between the file and referred file |

The information indicating the relative time difference T may be included (or recorded) in a service discovery entity 1300, e.g. schedule fragment 1301, or in the media level, e.g. moov box. For example, the schedule fragment 1321 may include the Synchronizationlnfo 1323 or RelativeTimeDifference (T) 1325.

### 4. mechanism 4: Acquisition information

### 4.1 Problem

Because each service/component may come from totally different channels or networks, an acquisition information (e.g., acquisition fragment 701) may be signaled.

### 4.2 solution

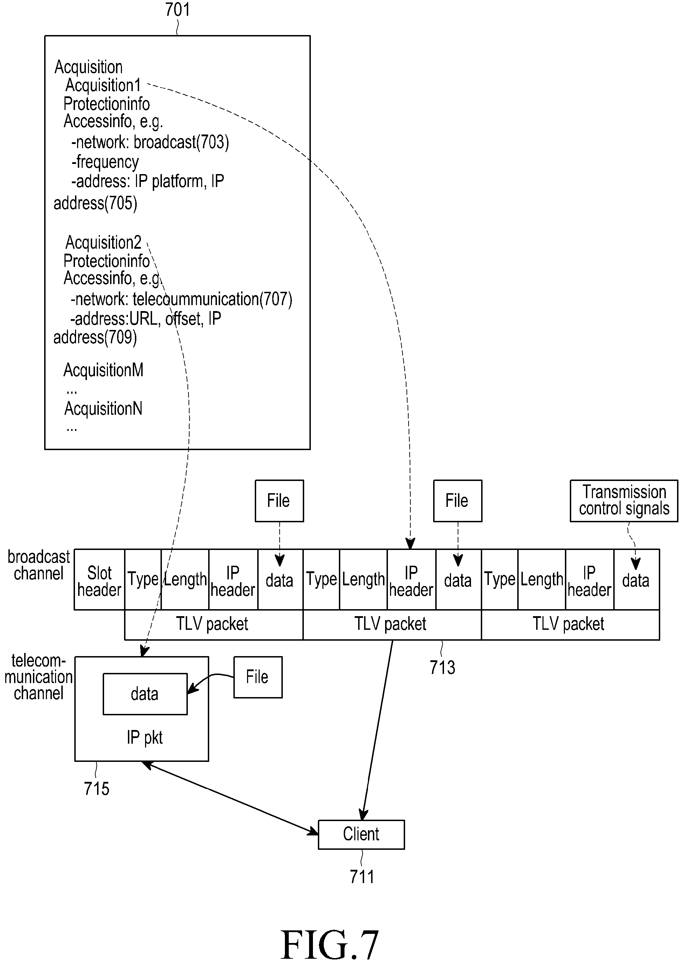

In the acquisition fragment 701, an access network and address for each channel in the hybrid case could be signaled. An example is illustrated in FIG. 7.

Network type 703 of channel1 is broadcast, and network type 707 of channel2 is telecommunication. So a client 700 could start receive the right entity from the each channel, i.e. TLV (; Type Length Value) packet 713, and IP packet 715 from the broadcast channel, and telecommunication channel, respectively. In the broadcast network, at least one of the frequency, IP platform, and IP address 705 may be signaled. In the telecommunication network, at least one of URL, offset, and IP address 709 may be needed to be signaled.

### 5. mechanism5: define new tag value for service discovery in TLV protocol

### 5.1 problem

A service provider may use TLV protocol for providing services in hybrid delivery system. For example, the NHK (; Japan Broadcasting Corporation) has proposed to use TLV protocol in hybrid delivery system. Since hybrid service information is carried in a service discovery entity, it is important for a client to find and parse the service discovery entity. The missing point is how to signal the service discovery entity based on TLV protocol.

### 5.2 solution

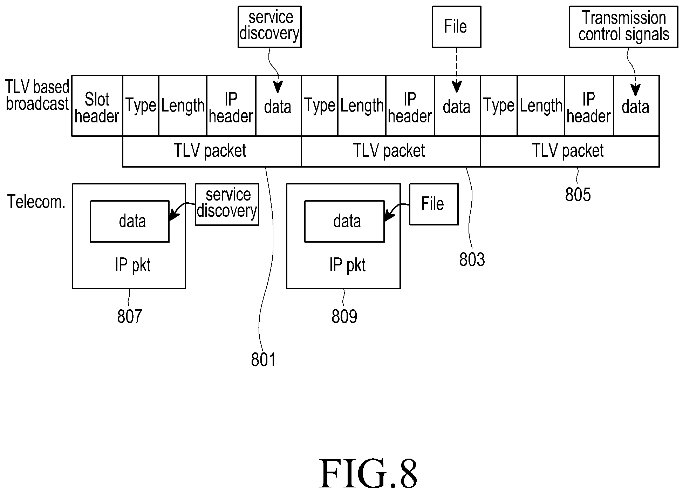

FIG. 8 is a service discovery entity in TLV packet, according to an embodiment of the present invention.

Some specific TLV packet 801, and 807 could be used for service discovery, and other packets could be used for media data file 803, and 809, and transmission control signal 805. Specific tag and value for different kinds of packets are defined as Table 3.

**[Table 3]**

| Tag Value | Type |
|---|---|
| 10 | Service Discovery |

A tag value '10' is reserved (or defined) for service discovery. Otherwise, any other tag value may be reserved (or defined) for the service discovery.

### 6 client/server procedure

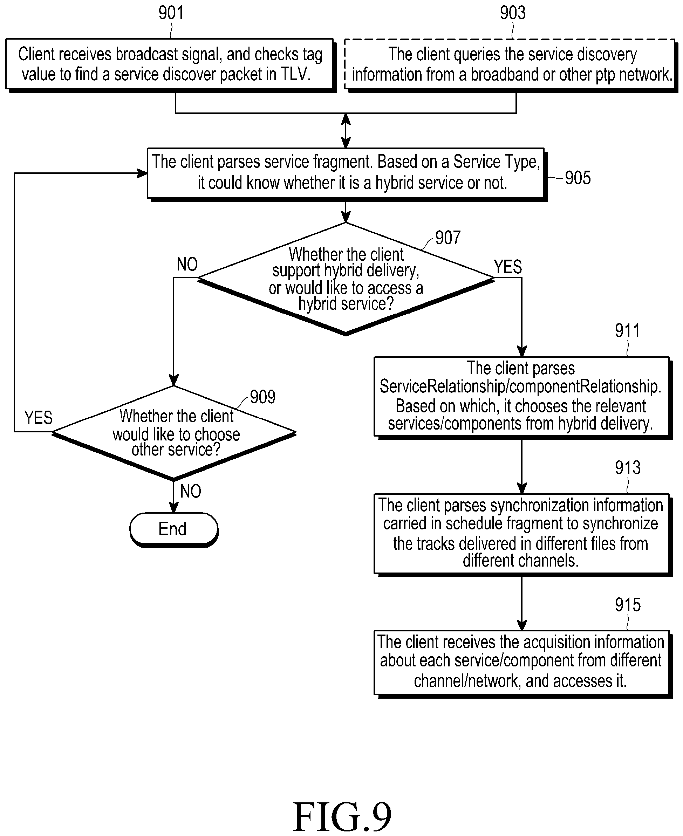

FIG. 9 is a flowchart illustrating a process of accessing service by a client, according to an embodiment of the present invention.

Firstly, a client receives broadcast signal and checks a tag value to find service discovery information (e.g., a service discovery entity 1300) in TLV packets in the received broadcast signal in step 901. Selectively, the client could access the service discovery information from one of telecommunication network, broadband network, and other p-t-p (; point to point) networks in step 903.

After receiving service discovery information, the client parses service fragment 1301 and checks ServiceType to know whether an interest service is hybrid service or not in step 905.

If the service is hybrid service, the client determines whether the client could support the service and the client would like to access the service in step 907.

Based on the determining in step 907, if the client could not support the service and the client would not like to access the service, the client further determines where the client would like to choose other service or not in step 909.

Depending on the determining in step 909, the client will choose other service to access by moving on the step 905, otherwise the client will stop parsing the service fragment.

Based on the determining in step 907, if the client could support the service or the client would like to access the service, the client may check the ServiceRelationship/ComponentRelationship to find the related service in the other channels, and check their relationship in step 911. Based on their relationship, the client could choose the relevant services/components in step 911.

By parsing synchronization information between files from different channels, the client could know how to synchronize the files from different channels in step 913. The synchronization information may be included in a schedule fragment 1321 of the received service discovery entity.

Based on acquisition information (e.g., a acquisition fragment 701), the client could know access information of each service/component from different channels/networks and access the service/component in step 915.

In the procedure illustrated in Fig. 9, one or more steps may be omitted while implementing embodiments according to the present invention.

In this procedure, information related to the hybrid delivery is carried in the service discovery entity 1300. Selectively, the information related to the hybrid delivery could also be carried in media level.

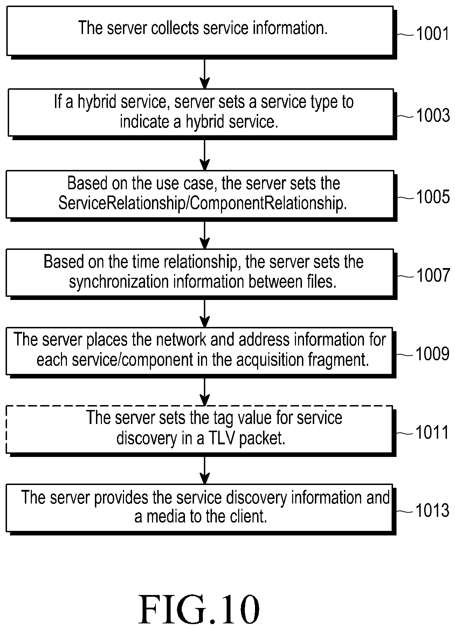

FIG. 10 is a flowchart illustrating a process of providing service discovery information by a server, according to an embodiment of the present invention.

The server will collect service information which is related to a service to be provided in step 1001.

If the service is hybrid service, the server will set a value of ServiceType to indicate that the service is hybrid in step 1003.

Based on use cases, the server indicates their relationship between services and/or components by ServiceRelationship/ComponentRelationship in step 1005.

The server sets a value of synchronization information between files in step 1007. The synchronization information may be a relative time difference T and may be included in a schedule fragment 1321.

The server sets values for access information e.g. network information, and address information in step 1009.

When service discovery information is transmitted in broadcast channel using TLV packet, the server sets a tag value for the service discovery information in step 1011.

Then the server will provide this information and media-related file to one or more clients in step 1013.

In the procedure illustrated in Fig. 10, one or more steps may be omitted while implementing embodiments according to the present invention.

### 7 client/server structure

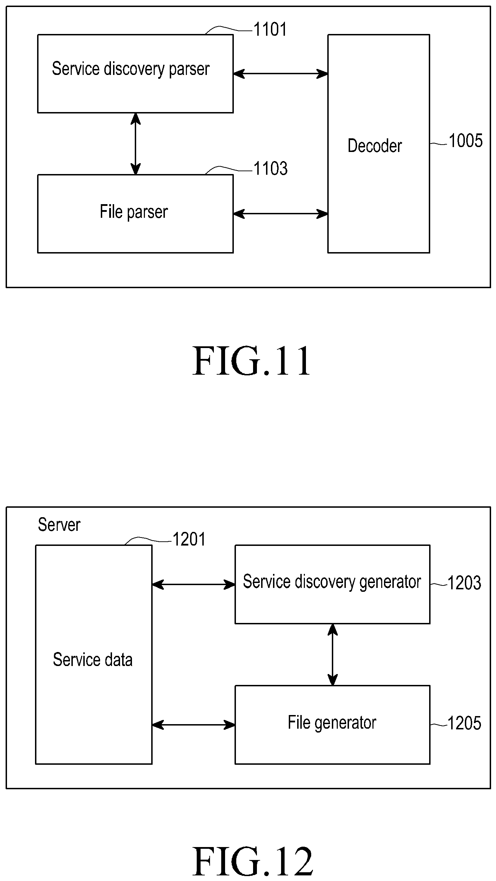

FIG. 11 is a block diagram illustrating a structure of a client apparatus in a multimedia transmission system, according to an embodiment of the present invention.

The client apparatus may include one or more entities, such as service discovery parser 1101, file parser 1103, and decoder 1105. The service discovery parser 1101 will parse service discovery metadata (e.g. service discovery entity), and choose the service for accessing. Hybrid related signaling is carried in the service discovery metadata. Then media data and related information are processed in the file parser 1103, and decoder 1105 for playing. The file parser 1103 parses the media data, and the decoder 1105 decodes the media data the decoded media data (file). The client apparatus may further include a receiver for receiving data from a server.

FIG. 12 is a block diagram illustrating a structure of a server apparatus in a multimedia transmission system, according to an embodiment of the present invention.

The server apparatus may include one or more entities, such as service data 1201, service discovery generator 1203, and file generator 1205. The service data 1201 may be a memory or data storage for raw data to be provided as media service. Based on the service data 1201, the server discovery generator 1203 generates service discovery metadata to be transmitted to one or more clients. The file generator 1205 generates one or more files to be transmitted to the clients. The files have media data and its related presentation information. The server apparatus may further include a transmitter for transmitting data to one or more clients.

FIG. 13. is one example when new signaling according to an embodiment of the present invention is carried in service discovery level.

In this example, two services, service1 1302, and service2 1315 are delivered in different channels, broadcast and telecommunication, respectively. Thus, the services are in hybrid delivery mechanism.

The relationship between service 1 and service2 is indicated in ServiceType 1037. Their component fragment 1341, schedule fragment 1321, synchronizationinfo 1325 are also given. The services 1302, and 1315 could have different purchase information if they are provided independently. And their network information 703, and 707, and address information 705, and 709 could be found in a acquisition fragment 701.

Fig. 13 is example that two services are delivered in different channel. It could also be possible that two components within one service are delivered in different channel. Then the service is set as hybrid service, and the relationship between components is signaled in the component level, such as ComponentRelationship 1345, and RelatedComponent 1347.

While the invention has been shown and described with reference to certain exemplary embodiments thereof, it will be understood by those skilled in the art that various changes in form and details may be made therein without departing from the scope of the invention as defined by the appended claims.

## Claims

1. A method for transmitting service discovery information to a client (205) in a hybrid delivery multimedia transmission system, comprising:
generating service discovery information related to a service, the service discovery information including service type information indicating that the service is provided by a plurality of channels including a first channel and a second channel in a plurality of networks including a first network and a second network, the first channel being different from the second channel and the first network being different from the second network; and
transmitting the service discovery information to the client (205);
wherein one or more first service components of the service are transmitted to the client (205) via the first channel of the first network and one or more second service components of the service are transmitted to the client via the second channel of the second network, the one or more first service components being different from the one or more second service components, and
wherein the service discovery information further includes relation information indicating a relationship between content of the one or more first service components and content of the one or more second service components, and network and address information for accessing the one or more first service components and the one or more second service components,
wherein the first network is a broadcast network (201) and the second network is a telecommunication network (203),
wherein the network and address information for accessing the one or more first service components includes information about a frequency, an Internet protocol, IP, platform, and an IP address, and
wherein the network and address information for accessing the one or more second service components includes a uniform resource locator and an IP address.

2. The method of claim 1, wherein the service type information is signaled in a service fragment of the service discovery information.

3. The method of claim 1, wherein the service discovery information further includes synchronization information for synchronizing the one or more first service components with the one or more second service components.

4. The method of claim 3, wherein the synchronization information is a relative time difference between the one or more first service components and the one or more second service components.

5. The method of claim 1, further comprising, prior to the transmitting step:
setting a tag value for the service discovery information in a type length value, TLV, packet,
wherein the service discovery information is included in the TLV packet.

6. A server configured to perform the method of one of claims 1 to 5.

7. A method performed by a client (205) for receiving service discovery information from a server in a hybrid delivery
multimedia transmission system, comprising:
receiving (301), from the server, service discovery information related to a service, the service discovery information including service type information indicating that the service is provided by a plurality of channels including a first channel and a second channel in a plurality of networks including a first network and a second network, the first channel being different from the second channel and the first network being different from the second network;
parsing (303) the service type information; and
identifying that one or more first service components of the service are transmitted to the client (205) via the first channel of the first network and one or more second service components of the service are transmitted to the client (205) via the second channel of the second network, the one or more first service components being different from the one or more second service components,
wherein the service discovery information further includes relation information indicating a relationship between content of the one or more first service components and content of the one or more second service components, and network and address information for accessing the one or more first service components and the one or more second service components,
wherein the first network is a broadcast network (201) and the second network is a telecommunication network (203),
wherein the network and address information for accessing the one or more first ser vice components includes information about a frequency, an Internet protocol, IP, platform, and an IP address, and
wherein the network and address information for accessing the one or more second service components includes a uniform resource locator and an IP address.

8. The method of claim 7, wherein the service type information is signaled in a service fragment of the service discovery information.

9. The method of claim 7, further comprises:
parsing synchronization information for synchronizing the one or more first service components with the one or more second service components.

10. The method of claim 9, wherein the synchronization information is a relative time difference between the one or more first service components and the one or more second service components.

11. The method of claim 7, further comprising, prior to the receiving step:
checking a tag value for the service discovery information set in a type length value, TLV, packet transmitted from the server,
wherein the service discovery information is included in the TLV packet.

12. A client configured to perform the method of one of claims 7 to 11.

## Patentansprüche

1. Verfahren zum Übertragen von Service-Discovery-Informationen an einen Client (205)
in einem Multimedia-Übertragungssystem zur Hybrid-Bereitstellung, umfassend:
Generieren von Service-Discovery-Informationen in Bezug auf einen Dienst, wobei die Service-Discovery-Informationen Diensttypinformationen einschließen, die angeben, dass der Dienst von mehreren Kanälen, die einen ersten Kanal und einen zweiten Kanal einschließen, in mehreren Netzwerken, die ein erstes Netzwerk und ein zweites Netzwerk einschließen, bereitgestellt wird, wobei sich der erste Kanal vom zweiten Kanal und das erste Netzwerk vom zweiten Netzwerk unterscheidet; und
Übertragen der Service-Discovery-Informationen an den Client (205);
wobei eine oder mehrere erste Dienstkomponenten des Dienstes über den ersten Kanal des ersten Netzwerks an den Client (205) übertragen werden und eine oder mehrere zweite Dienstkomponenten des Dienstes über den zweiten Kanal des zweiten Netzwerks an den Client übertragen werden, wobei die eine oder mehreren ersten Dienstkomponenten sich von der einen oder mehreren zweiten Dienstkomponenten unterscheiden, und
wobei die Service-Discovery-Informationen ferner Beziehungsinformationen einschließen, die eine Beziehung zwischen dem Inhalt der einen oder mehreren ersten Dienstkomponenten und Inhalt der einen oder mehreren zweiten Dienstkomponenten sowie Netzwerk- und Adressinformationen zum Zugreifen auf die eine oder mehreren ersten Dienstkomponenten und die eine oder mehreren zweiten Dienstkomponenten angeben,
wobei das erste Netzwerk ein Rundfunknetzwerk (201) ist und das zweite Netzwerk ein Telekommunikationsnetzwerk (203) ist,
wobei die Netzwerk- und Adressinformationen zum Zugreifen auf die eine oder mehreren ersten Dienstkomponenten Informationen über eine Frequenz, eine Internetprotokoll(IP)-Plattform und eine IP-Adresse einschließen, und
wobei die Netzwerk- und Adressinformationen zum Zugreifen auf die eine oder mehreren zweiten Dienstkomponenten einen einheitlichen Ressourcenlokalisierer und eine IP-Adresse einschließen.

2. Verfahren nach Anspruch 1, wobei die Diensttypinformationen in einem Dienstfragment der Service-Discovery-Informationen signalisiert werden.

3. Verfahren nach Anspruch 1, wobei die Service-Discovery-Informationen ferner Synchronisationsinformationen zum Synchronisieren der einen oder mehreren ersten Dienstkomponenten mit der einen oder mehreren zweiten Dienstkomponenten einschließen.

4. Verfahren nach Anspruch 3, wobei die Synchronisationsinformationen eine relative Zeitdifferenz zwischen der einen oder mehreren ersten Dienstkomponenten und der einen oder mehreren zweiten Dienstkomponenten sind.

5. Verfahren nach Anspruch 1, vor dem Übertragungsschritt ferner umfassend:
Festlegen eines Tag-Werts für die Service-Discovery-Informationen in einem Typ-Länge-Wert(TLV)-Paket,
wobei die Service-Discovery-Informationen in dem TLV-Paket eingeschlossen sind.

6. Server, der zur Durchführung des Verfahrens nach einem der Ansprüche 1 bis 5 konfiguriert ist.

7. Verfahren, das von einem Client (205) zum Empfangen von Service-Discovery-Informationen von einem Server in einem Multimedia-Übertragungssystem zur Hybrid-Bereitstellung durchgeführt wird, umfassend:
Empfangen (301) von Service-Discovery-Informationen in Bezug auf einen Dienst vom Server, wobei die Service-Discovery-Informationen Diensttypinformationen einschließen, die angeben, dass der Dienst von mehreren Kanälen, die einen ersten Kanal und einen zweiten Kanal einschließen, in mehreren Netzwerken, die ein erstes Netzwerk und ein zweites Netzwerk einschließen, bereitgestellt wird, wobei sich der erste Kanal vom zweiten Kanal und das erste Netzwerk vom zweiten Netzwerk unterscheidet; und
Analysieren (303) der Diensttypinformationen; und
Identifizieren, dass eine oder mehrere erste Dienstkomponenten des Dienstes über den ersten Kanal des ersten Netzwerks an den Client (205) übertragen werden und eine oder mehrere zweite Dienstkomponenten des Dienstes über den zweiten Kanal des zweiten Netzwerks an den Client (205) übertragen werden, wobei die eine oder mehreren ersten Dienstkomponenten sich von der einen oder mehreren zweiten Dienstkomponenten unterscheiden,
wobei die Service-Discovery-Informationen ferner Beziehungsinformationen einschließen, die eine Beziehung zwischen dem Inhalt der einen oder mehreren ersten Dienstkomponenten und Inhalt der einen oder mehreren zweiten Dienstkomponenten sowie Netzwerk- und Adressinformationen zum Zugreifen auf die eine oder mehreren ersten Dienstkomponenten und die eine oder mehreren zweiten Dienstkomponenten angeben,
wobei das erste Netzwerk ein Rundfunknetzwerk (201) ist und das zweite Netzwerk ein Telekommunikationsnetzwerk (203) ist,
wobei die Netzwerk- und Adressinformationen zum Zugreifen auf die eine oder mehreren ersten Dienstkomponenten Informationen über eine Frequenz, eine Internetprotokoll(IP)-Plattform und eine IP-Adresse einschließen, und
wobei die Netzwerk- und Adressinformationen zum Zugreifen auf die eine oder mehreren zweiten Dienstkomponenten einen einheitlichen Ressourcenlokalisierer und eine IP-Adresse einschließen.

8. Verfahren nach Anspruch 7, wobei die Diensttypinformationen in einem Dienstfragment der Service-Discovery-Informationen signalisiert werden.

9. Verfahren nach Anspruch 7, ferner Folgendes umfassend:
Analysieren von Synchronisationsinformationen zum Synchronisieren der einen oder mehreren ersten Dienstkomponenten mit der einen oder mehreren zweiten Dienstkomponenten.

10. Verfahren nach Anspruch 9, wobei die Synchronisationsinformationen eine relative Zeitdifferenz zwischen der einen oder mehreren ersten Dienstkomponenten und der einen oder mehreren zweiten Dienstkomponenten sind.

11. Verfahren nach Anspruch 7, vor dem Empfangsschritt ferner umfassend:
Überprüfen eines Tag-Werts für den Service-Discovery-Informationssatz in einem vom Server übertragenen Typ-Länge-Wert(TLV)-Paket,
wobei die Service-Discovery-Informationen in dem TLV-Paket eingeschlossen sind.

12. Client, der zur Durchführung des Verfahrens nach einem der Ansprüche 7 bis 11 konfiguriert ist.

## Revendications

1. Procédé de transmission d'informations de découverte de service à un client (205) dans un système de transmission multimédia de fourniture hybride, comprenant :
générer des informations de découverte de service relatives à un service, les informations de découverte de service incluant des informations de type de service indiquant que le service est fourni par une pluralité de canaux incluant un premier canal et un deuxième canal dans une pluralité de réseaux incluant un premier réseau et un deuxième réseau, le premier canal étant différent du deuxième canal et le premier réseau étant différent du deuxième réseau ; et
transmettre les informations de découverte de service au client (205) ;
où un ou plusieurs premiers composants de service du service sont transmis au client (205) par l'intermédiaire du premier canal du premier réseau et un ou plusieurs deuxièmes composants de service du service sont transmis au client par l'intermédiaire du deuxième canal du deuxième réseau, les un ou plusieurs premiers composants de service étant différents des un ou plusieurs deuxièmes composants de service, et
où les informations de découverte de service comprennent en outre des informations de relation indiquant un rapport entre un contenu des premiers un ou plusieurs composants de service et un contenu des deuxièmes un ou plusieurs composants de service, et des informations de réseau et des informations d'adresse pour accéder aux premiers un ou plusieurs composants de service et aux deuxièmes un ou plusieurs composants de service,
où le premier réseau est un réseau de diffusion (201) et le deuxième réseau est un réseau de télécommunication (203),
où les informations de réseau et d'adresse pour accéder aux un ou plusieurs premiers composants de service comprennent des informations sur une fréquence, une plate-forme de protocole Internet, IP, et une adresse IP, et
où les informations de réseau et d'adresse pour accéder aux un ou plusieurs deuxièmes composants de service comprennent un localisateur uniforme de ressources et une adresse IP.

2. Procédé selon la revendication 1, où les informations de type de service sont signalées dans un fragment de service des informations de découverte de service.

3. Procédé selon la revendication 1, où les informations de découverte de service comprennent en outre des informations de synchronisation pour synchroniser les un ou plusieurs premiers composants de service avec les un ou plusieurs deuxièmes composants de service.

4. Procédé selon la revendication 3, où les informations de synchronisation constituent une différence de temps relative entre les un ou plusieurs premiers composants de service et les un ou plusieurs deuxièmes composants de service.

5. Procédé selon la revendication 1, comprenant en outre, avant l'étape de transmission :
définir une valeur d'étiquette pour les informations de découverte de service dans un paquet de valeur de longueur type, TLV,
où les informations de découverte de service sont incluses dans le paquet TLV.

6. Serveur configuré pour effectuer le procédé selon l'une des revendications 1 à 5.

7. Procédé effectué par un client (205) pour recevoir des informations de découverte de service à partir d'un serveur dans un système de transmission multimédia de fourniture hybride comprenant :
recevoir (301), à partir du serveur, des informations de découverte de service relatives à un service, les informations de découverte de service incluant des informations de type de service indiquant que le service est fourni par une pluralité de canaux incluant un premier canal et un deuxième canal dans une pluralité de réseaux incluant un premier réseau et un deuxième réseau, le premier canal étant différent du deuxième canal et le premier réseau étant différent du deuxième réseau ;
analyser syntaxiquement (303) les informations de type de service ; et
identifier qu'un ou plusieurs premiers composants de service du service sont transmis au client (205) par le premier canal du premier réseau et qu'un ou plusieurs deuxièmes composants de service du service sont transmis au client (205) par le deuxième canal du deuxième réseau, les un ou plusieurs premiers composants de service étant différents des un ou plusieurs deuxièmes composants de service,
où les informations de découverte de service comprennent en outre des informations de relation indiquant un rapport entre un contenu des un ou plusieurs premiers composants de service et un contenu des un ou plusieurs deuxièmes composants de service, et des informations réseau et d'adresse pour accéder aux un ou plusieurs premiers composants de service et les un ou plusieurs deuxièmes composants de service,
où le premier réseau est un réseau de diffusion (201) et le deuxième réseau est un réseau de télécommunication (203),
où les informations de réseau et d'adresse pour accéder aux un ou plusieurs premiers composants de service comprennent des informations sur une fréquence, une plate-forme de protocole Internet IP et une adresse IP, et
où les informations de réseau et d'adresse pour accéder aux un ou plusieurs deuxièmes composants de service comprennent un localisateur uniforme de ressources et une adresse IP.

8. Procédé selon la revendication 7, où les informations de type de service sont signalées dans un fragment de service des informations de découverte de service.

9. Procédé selon la revendication 7, comprenant en outre :
analyser des informations de synchronisation pour synchroniser les un ou plusieurs premiers composants de service avec les un ou plusieurs deuxièmes composants de service.

10. Procédé selon la revendication 9, où les informations de synchronisation constituent une différence de temps relative entre les un ou plusieurs premiers composants de service et les un ou plusieurs deuxièmes composants de service.

11. Procédé selon la revendication 7, comprenant en outre, avant l'étape de réception :
vérifier une valeur d'étiquette pour des informations de découverte de service définie dans un paquet de valeur de longueur type, TLV, transmis à partir du serveur,
où les informations de découverte de service sont incluses dans le paquet TLV.

12. Client configuré pour effectuer le procédé selon l'une des revendications 7 à 11.
